(19)

Europäisches
Patentamt
European
Patent Office
Office européen
des brevets

(11) **EP 3 211 775 A2**

(12) **EUROPEAN PATENT APPLICATION**

(43) Date of publication:
**30.08.2017 Bulletin 2017/35**

(51) Int Cl.:
*H02K 29/03* (2006.01)        *H02K 3/28* (2006.01)

(21) Application number: **17162811.8**

(22) Date of filing: **24.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **26.01.2016 CZ 20160035**

(71) Applicant: **Vysoké ucení Technické v Brne
60190 Brno (CZ)**

(72) Inventors:
• **Patocka, Miroslav
64400 Sobesice (CZ)**
• **Cipin, Radoslav
62500 Brno (CZ)**

(74) Representative: **Malusek, Jiri
Mendlovo namesti 1 a
603 00 Brno (CZ)**

Remarks:
A request for re-establishment of rights in respect of
the twelve-month period from the date of filing of the
first application has been granted (Art.87(1) and
Art.122 EPC).

(54) **UNEQUAL DISTRIBUTION OF CONDUCTORS IN A CORE OF A THREE-PHASE MACHINE**

(57)     The stator or rotor of a three-phase AC machine
containins slots, teeth and a winding forming at least one
pole-pair. The winding of each of the three phases is
positioned in slots and thereby creating each pole-pairs.
In order to create a harmonic winding, each slot contains
a winding of at least two different phases, the number of
conductor turns in each slot is always the same and the
number of conductor turns of one phase in said slot is
different from the number of conductor turns of the same
phase in at least one of the adjacent slots.

Fig. 3

**Description**

Background of the invention

The invention refers to distribution of conductors in stator/rotor winding of three-phase AC revolving machines.

State of the art

In the case of three-phase AC induction or synchronous electrical machines, the effort is to distribute the conductors of each phase winding into slots of stator or rotor so that the flux density in the air gap has an ideal harmonic, i.e. sinusoidal, spatial course, when moving along the circumference of the air gap.

The so-called "harmonic winding", where the conductors of each phase are distributed harmonically in slots along the whole circumference of the pole-pair, is commonly known among experts in the field. Although this winding generates harmonic course of flux density along the air gap, its winding factor is only 0.785. Moreover, this winding is three-layer, therefore very difficult to manufacture. This is why this winding is not being used in practice at all.

All known and practically used solutions are only close to this ideal. The solution is always a compromise between winding complexity, deviation of the ideal harmonic course and achieved winding factor, where the winding factor is a number lying in the interval from 0 to 1, ideally equal to 1.

The aim of the invention is to introduce such a distribution of conductors in stator/rotor winding of three-phase AC revolving machines which eliminates the above mentioned disadvantages of state-of-the-art and generates purely harmonic course of the flux density along the air gap.

Feature of the invention

The above mentioned drawbacks are eliminated by the stator/rotor of the three-phase AC revolving machine containing slots and at least one pole-pair, where the stator/rotor winding of all three phases is placed in slots of each pole-pair, where the number of conductors in the i-th slot of one pole-pair in one phase of the three-phase winding is equal to the number of conductors given by the formula

$$N_{s,i} = \int_{(i-1)\frac{2\pi}{Q}}^{i\frac{2\pi}{Q}} n(\alpha)\,\mathrm{d}\alpha \,,$$

where Q is the number of slots of one stator/rotor pole-pair, i denotes the corresponding slot, where i is a natural number lying in the interval from 1 to Q, and $n(\alpha)$ is the oriented conductor density of the phase winding, while the maximum difference of the number of conductors $N_{s,i}$ is calculated according to the formula

$$\Delta N_{s,i} = \pm N \frac{36}{Q^2} \,,$$

where N is the total number of turns in one pole-pair of the phase winding, and Q is the number of slots of one stator/rotor pole-pair.

In advantages embodiment the oriented conductor density $n(\alpha)$ in one pole-pair of the phase winding is given by the formula

$$n(\alpha) = \begin{cases} N \cos\left(\alpha + \dfrac{\pi}{6}\right) & \text{pro } \alpha \in \left\langle 0 ; \dfrac{\pi}{3}\right\rangle \\[2ex] 0 & \text{pro } \alpha \in \left\langle \dfrac{\pi}{3} ; \dfrac{2\pi}{3}\right\rangle \\[2ex] -N \cos\left(\alpha + \dfrac{5\pi}{6}\right) & \text{pro } \alpha \in \left\langle \dfrac{2\pi}{3} ; \pi\right\rangle \\[2ex] -N \cos\left(\alpha - \dfrac{5\pi}{6}\right) & \text{pro } \alpha \in \left\langle \pi ; \dfrac{4\pi}{3}\right\rangle \\[2ex] 0 & \text{pro } \alpha \in \left\langle \dfrac{4\pi}{3} ; \dfrac{5\pi}{3}\right\rangle \\[2ex] N \cos\left(\alpha - \dfrac{\pi}{6}\right) & \text{pro } \alpha \in \left\langle \dfrac{5\pi}{3} ; 2\pi\right\rangle \end{cases}$$

where the electrical angle α measured along the air gap of the three-phase AC machine reaches values lying in the range from 0 to 2π, where the angle 2π corresponds to one pole-pair of the stator/rotor phase winding, where the chosen positive current direction in the conductors of the corresponding slot corresponds to the positive value of the oriented density n(α) and the negative current direction corresponds to the negative value of n(α), and where N is the total number of turns of one pole-pair of the stator/rotor phase winding.

In other advantages embodiment the oriented conductor density n(α) in one pole-pair of the phase winding is given by the formula

$$n(\alpha) = \begin{cases} N \left(\dfrac{3}{\pi}\right)^2 \left(\dfrac{\pi}{3} - \alpha\right) & \text{pro } \alpha \in \left\langle 0 ; \dfrac{\pi}{3}\right\rangle \\[2ex] 0 & \text{pro } \alpha \in \left\langle \dfrac{\pi}{3} ; \dfrac{2\pi}{3}\right\rangle \\[2ex] N \left(\dfrac{3}{\pi}\right)^2 \left(\dfrac{2\pi}{3} - \alpha\right) & \text{pro } \alpha \in \left\langle \dfrac{2\pi}{3} ; \pi\right\rangle \\[2ex] N \left(\dfrac{3}{\pi}\right)^2 \left(\alpha - \dfrac{4\pi}{3}\right) & \text{pro } \alpha \in \left\langle \pi ; \dfrac{4\pi}{3}\right\rangle \\[2ex] 0 & \text{pro } \alpha \in \left\langle \dfrac{4\pi}{3} ; \dfrac{5\pi}{3}\right\rangle \\[2ex] N \left(\dfrac{3}{\pi}\right)^2 \left(\alpha - \dfrac{5\pi}{3}\right) & \text{pro } \alpha \in \left\langle \dfrac{5\pi}{3} ; 2\pi\right\rangle \end{cases}$$

where the electrical angle α measured along the air gap of the three-phase AC machine reaches values lying in the range from 0 to 2π, where the angle 2π corresponds to one pole-pair of the stator/rotor phase winding, where the chosen positive current direction in the conductors of the corresponding slot corresponds to the positive value of the oriented density n(α) and the negative current direction corresponds to the negative value of n(α), and where N is the total number of turns of one pole-pair of the stator/rotor phase winding.

Description of the drawings

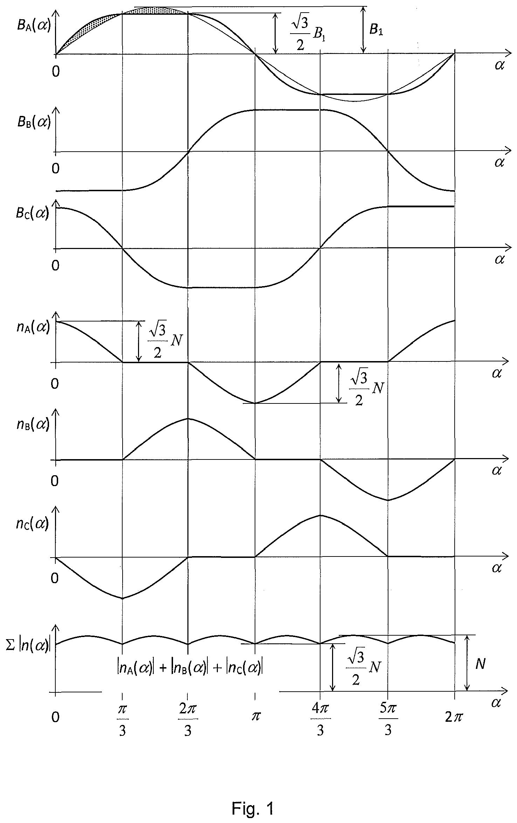

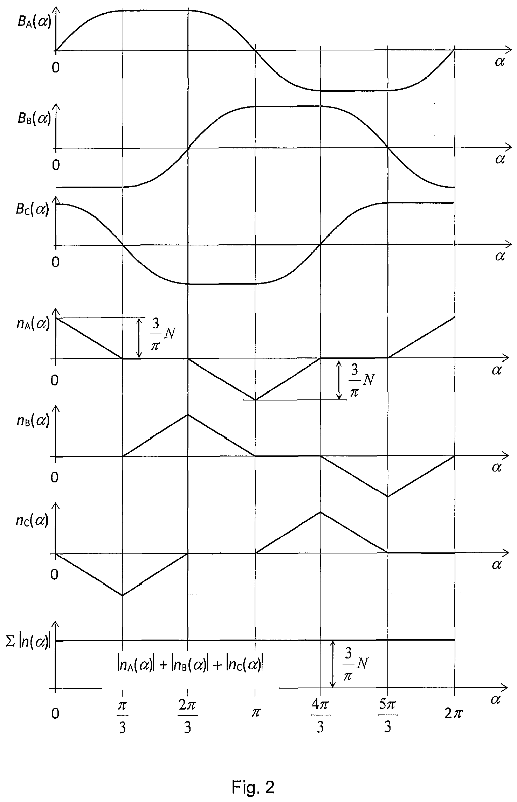

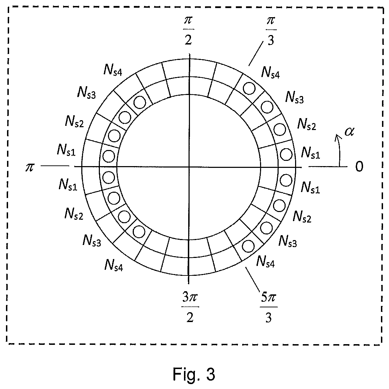

The invention will be further clarified using figures, where Fig. 1 represents the functions of one pole-pair of the three-phase winding defined by an equation for the economical harmonic winding, where the functions $B_A(\alpha)$, $B_B(\alpha)$, $B_C(\alpha)$ are the courses of flux densities, functions $n_A(\alpha)$, $n_A(\alpha)$, $n_A(\alpha)$ are oriented conductor densities of the phase winding and the function $\Sigma|n(\alpha)|$ is the sum of conductor numbers in individual slots, Fig. 2 represents the functions of one pole-pair of the three-phase winding defined by equation for the economical quasi-harmonic winding, where the functions $B_A(\alpha)$, $B_B(\alpha)$, $B_C(\alpha)$ are the courses of flux densities, functions $n_A(\alpha)$, $n_A(\alpha)$, $n_A(\alpha)$ are oriented conductor densities of the phase winding and the function $\Sigma|n(\alpha)|$ is the sum of conductor numbers in individual slots, and Fig. 3 represents one pole-pair of the economical harmonic two-layer winding with shown conductors belonging to only one phase, where Q = 24 and $\alpha$s = 15 degrees.

Preferred embodiments of the invention

The conductor distribution in the stator/rotor winding of three-phase AC revolving machines according to the invention, where the total conductor number $N_{s,i}$ in the i-th slot of one pole-pair in one phase of the three-phase winding is given by equation:

$$N_{s,i} = \int_{(i-1)\frac{2\pi}{Q}}^{i\frac{2\pi}{Q}} n(\alpha)\mathrm{d}\alpha, \qquad \text{for i = 1, 2, ..., Q,} \qquad (1)$$

where:

Q is the number of slots of one stator/rotor pole-pair, where Q cannot be arbitrary, but

it can reach only values:

$$Q = 6k \qquad \text{pro} \quad k = 2, 3, 4, 5, 6, ..., \qquad (2)$$

k is an arbitrary natural number larger than 1,
$n(\alpha)$ is the oriented conductor density of one pole-pair of phase winding defined in parts, i.e. in six intervals, by equations for the economical harmonic winding:

$$n(\alpha) = \begin{cases} N\cos\left(\alpha + \dfrac{\pi}{6}\right) & \text{pro } \alpha \in \left\langle 0; \dfrac{\pi}{3}\right\rangle \\[2mm] 0 & \text{pro } \alpha \in \left\langle \dfrac{\pi}{3}; \dfrac{2\pi}{3}\right\rangle \\[2mm] -N\cos\left(\alpha + \dfrac{5\pi}{6}\right) & \text{pro } \alpha \in \left\langle \dfrac{2\pi}{3}; \pi\right\rangle \\[2mm] -N\cos\left(\alpha - \dfrac{5\pi}{6}\right) & \text{pro } \alpha \in \left\langle \pi; \dfrac{4\pi}{3}\right\rangle \\[2mm] 0 & \text{pro } \alpha \in \left\langle \dfrac{4\pi}{3}; \dfrac{5\pi}{3}\right\rangle \\[2mm] N\cos\left(\alpha - \dfrac{\pi}{6}\right) & \text{pro } \alpha \in \left\langle \dfrac{5\pi}{3}; 2\pi\right\rangle \end{cases} \qquad (3)$$

where the electrical angle $\alpha$ measured along the air gap of the machine reaches values in the range from 0 to $2\pi$, where the angle $2\pi$ corresponds to one pole-pair.

The chosen positive current direction in the conductors of the corresponding slot corresponds to the positive value of the oriented density n($\alpha$). The opposite, i.e. negative, current direction corresponds to the negative value of n($\alpha$), where N is the total number of turns of one pole-pair of the phase winding and N is calculated in a standard way from the induction law, i.e. from formula:

$$u_i(t) = k_{w,1} N \frac{\mathrm{d}\Phi_{tot}(t)}{\mathrm{d}t}, \tag{4}$$

where:

$u_i(t)$ is the induced voltage of one pole-pair of the phase winding,
$\varphi_{tot}(t)$ is the total magnetic flux of one pole-pair,
$k_{w,1}$ is the total winding factor for the useful first harmonic component, where its value is:

$$k_{w,1} = \frac{\pi}{2} \cdot \frac{n_1}{N} = \frac{\pi}{2} \cdot \frac{1}{\sqrt{3}} = 0.90690, \tag{5}$$

where $n_1$ is the amplitude of the first harmonic component in the Fourier expansion of the function n($\alpha$) defined by equations (3), this amplitude equals:

$$n_1 = \frac{N}{\sqrt{3}}. \tag{6}$$

The function $n_A(\alpha)$ introduced in Fig. 1 is directly equal to the function n($\alpha$) defined by equations (3). Functions $n_B(\alpha)$, $n_C(\alpha)$ have the same courses, but they are shifted for an angle $+2\pi/3$ or $-2\pi/3$ compared to the function $n_A(\alpha)$.

From the courses of the functions $n_A(\alpha)$, $n_B(\alpha)$, $n_C(\alpha)$ it is evident that conductors corresponding to only two different phases are located in each slot. Therefore, this is a two-layer winding.

The course of the function $\Sigma|n(\alpha)|$ depicted in Fig. 1 shows that the sum of conductors in individual slots is unfortunately not constant, but it fluctuates between maximum and minimum in the ratio of (2/√3):1 = 1.155:1. This fluctuation is eliminated by a system for the economical quasi-harmonic winding being shown in Fig. 2 and expanding the function n($\alpha$) defined by equations (3) to the Taylor series and using only the first member of the series and normalizing the first member with the coefficient 3/$\pi$ to the same total number of turns N defined by equation (4) then the original function n($\alpha$) defined by equations (3) is modified to:

$$n(\alpha) = \begin{cases} N\left(\dfrac{3}{\pi}\right)^2\left(\dfrac{\pi}{3} - \alpha\right) & \text{pro } \alpha \in \left\langle 0; \dfrac{\pi}{3} \right\rangle \\[2ex] 0 & \text{pro } \alpha \in \left\langle \dfrac{\pi}{3}; \dfrac{2\pi}{3} \right\rangle \\[2ex] N\left(\dfrac{3}{\pi}\right)^2\left(\dfrac{2\pi}{3} - \alpha\right) & \text{pro } \alpha \in \left\langle \dfrac{2\pi}{3}; \pi \right\rangle \\[2ex] N\left(\dfrac{3}{\pi}\right)^2\left(\alpha - \dfrac{4\pi}{3}\right) & \text{pro } \alpha \in \left\langle \pi; \dfrac{4\pi}{3} \right\rangle \\[2ex] 0 & \text{pro } \alpha \in \left\langle \dfrac{4\pi}{3}; \dfrac{5\pi}{3} \right\rangle \\[2ex] N\left(\dfrac{3}{\pi}\right)^2\left(\alpha - \dfrac{5\pi}{3}\right) & \text{pro } \alpha \in \left\langle \dfrac{5\pi}{3}; 2\pi \right\rangle \end{cases} \tag{7}$$

As in the case of the equation (3), the angle $2\pi$, measured along the air gap of the machine, corresponds to one pole-pair. The chosen positive current direction in the conductors of the corresponding slot corresponds to the positive value of the oriented density $n(\alpha)$. The opposite, i.e. negative, current direction corresponds to the negative value of $n(\alpha)$. N is the total number of turns in one pole-pair of the phase winding and N is calculated in a standard way from the induction law (4), however in case of equations (7) the total winding factor $k_{w,1}$ for the useful first harmonic component has a slightly different value:

$$k_{w,1} = \frac{\pi}{2} \cdot \frac{n_1}{N} = \frac{\pi}{2} \cdot \frac{18}{\pi^3} = 0.9118906, \tag{8}$$

where $n_1$ is the amplitude of the first harmonic component in the Fourier expansion of the function $n(\alpha)$ defined by equations (7), this amplitude equals:

$$n_1 = \frac{18N}{\pi^3}. \tag{9}$$

The number $N_{s,i}$ of conductors in the i-th slot, determined by the equation (1), must be rounded to integer for the practical realization, this leads to differences $\Delta N_{s,i}$ from the ideal values given by the equation (1), where these differences can reach up to values given by the equation (10) in each individual slot without a substantial degradation of winding parameters.

$$\Delta N_{s,i} = \pm N \frac{36}{Q^2}, \tag{10}$$

where:

N is the total number of turns in one pole-pair of the phase winding determined by the equation (4), and Q is the number of slots of one stator/rotor pole-pair determined by the equation (2).

The equation (10) is valid for both winding types defined by equations (3) and (7).
From the course of the functions $n_A(\alpha)$, $n_B(\alpha)$, $n_C(\alpha)$ shown in Fig. 1 it is evident that conductors corresponding only to two different phases are located in each slot. Therefore, this is a two-layer winding. The course of the function $\Sigma|n(\alpha)|$ displayed in Fig. 1 shows that the sum of conductors in individual slots is constant. This represents the basic advantage in comparison with the previous economical harmonic winding.
The courses of flux densities $B_A(\alpha)$, $B_B(\alpha)$, $B_C(\alpha)$ in both Fig. 1 and Fig.2 arise from the mathematical relationships between functions $n(\alpha)$ and $B(\alpha)$:

$$n(\alpha) = \frac{g_e}{I_\mu \mu_0} \cdot \frac{dB(\alpha)}{d\alpha}, \tag{11}$$

where:

ge is the equivalent length of the air gap,

$I_\mu$ is the magnetizing current,

$\mu_0$ is the permeability of free space.

By integration of the differential equation (11) we obtain a reciprocal integral equation

$$B(\alpha) = \frac{I_\mu \mu_0}{g_e} \int n(\alpha) d\alpha \ . \tag{12}$$

The infinite integral in the equation (12) has to have a zero integration constant because both functions B($\alpha$) and n($\alpha$) must not contain a DC component for physical reasons.

Example of calculation

The example of calculation of the conductor distribution in the stator/rotor winding shown in Fig. 3 is realized for one pole-pair, p = 1, containing 24 stator slots, i.e. Q = 24. For multi-pole machines with a higher number of pole-pairs, p = 2, 3, ..., the design of one pole-pair would remain the same, assuming each pole-pair contains always the same number of slots Q = 24.

From Fig. 3 it is evident that the total number of conductors N is irregularly distributed to 8 slots lying in the interval $\alpha \in \langle \pi/3; 5\pi/3 \rangle$. Considering the symmetry along the horizontal axis, N/2 conductors are distributed according to the function n($\alpha$) into 4 slots lying in the interval $\alpha \in (0; \pi/3\rangle$. Using equations (1) and (3) the conductor numbers $N_{s1}$ to $N_{s4}$ in individual slots labeled with symbols s1 to s4 can be determined:

$$N_{s1} = \int_0^{\pi/12} n(\alpha) d\alpha = \int_0^{\pi/12} N \cos\left(\alpha + \frac{\pi}{6}\right) d\alpha = \frac{\sqrt{2} - 1}{2} N = 0,20711 N \ , \tag{13a}$$

$$N_{s2} = \int_{\pi/12}^{2\pi/12} n(\alpha) d\alpha = \int_{\pi/12}^{2\pi/12} N \cos\left(\alpha + \frac{\pi}{6}\right) d\alpha = \frac{\sqrt{3} - \sqrt{2}}{2} N = 0,15892 N \ , \tag{13b}$$

$$N_{s3} = \int_{2\pi/12}^{3\pi/12} n(\alpha) d\alpha = \int_{2\pi/12}^{3\pi/12} N \cos\left(\alpha + \frac{\pi}{6}\right) d\alpha = \frac{1 + \sqrt{3} - \sqrt{6}}{2\sqrt{2}} N = 0,09990 N \ , \tag{13c}$$

$$N_{s4} = \int_{3\pi/12}^{\pi/3} n(\alpha) d\alpha = \int_{3\pi/12}^{\pi/3} N \cos\left(\alpha + \frac{\pi}{6}\right) d\alpha = 1 - \frac{1 + \sqrt{3}}{2\sqrt{2}} N = 0,03407 N \ . \tag{13d}$$

Using the equation (14) it can be verified that the sum of conductors in all slots will be equal to the number N:

$$N = 2\left(N_{s1} + N_{s2} + N_{s3} + N_{s4}\right). \tag{14}$$

According to Fig.3 each slot contains two layers, where each layer belongs to a different phase. The sum of conductors of both layers is different in each slot and reaches two values

$$N_{s1} + N_{s4} = \frac{1 + \sqrt{2} - \sqrt{3}}{2\sqrt{2}} N = 0.24118 N \ , \quad N_{s2} + N_{s3} = \frac{\sqrt{3} - 1}{2\sqrt{2}} N = 0.25882 N \ , \tag{15}$$

where their ratio is 0.25882 : 0.24118 = 1.07313. Along the stator circumference two pairs of slots alternate regularly. The two slots in each pair always contain the same two numbers of conductors, i.e. 0.25882N and 0.24118N.

Analogically it is possible to calculate conductor numbers $N_{s,1}$, $N_{s,2}$, ... also for other numbers of slots different from Q = 24 or 36. The results are presented in Tab. 1 and Tab. 2.

However the total number Q of slots within one pole-pair cannot be an arbitrary number. It must be a multiple of six given by equation (2) and mentioned in Tab. 1. The numbers q of slots per pole and phase also correspond to equation (2). Theoretically there is no upper limit of the number Q.

| Q | 12 | 18 | 24 | 30 | 36 | 42 | 48 | 54 | 60 | 66 |
|---|----|----|----|----|----|----|----|----|----|----|
| q | 2 | 3 | 4 | 5 | 6 | 7 | 8 | 9 | 10 | 11 |

| Q | 72 | 78 | 84 | 90 | 96 | 102 | 108 | 114 | 120 | ... |
|---|----|----|----|----|----|-----|-----|-----|-----|-----|
| q | 12 | 13 | 14 | 15 | 16 | 17 | 18 | 19 | 20 | ... |

Tab. 1

The numbers $N_s$ of conductors in slots of one pole-pair in one phase of the three-phase winding are determined by the formula (1), where relative numbers of conductors $N_s/N$ in slots of one pole-pair in one phase of the three-phase winding calculated from (1) are presented in Tab. 2, representing relative numbers of conductors $N_s/N$ in slots of one pole-pair in one phase of the three-phase winding for acceptable numbers of slots Q in the economical harmonic winding.

| Q | 12 | 18 | 24 | 30 | 36 | 42 | 48 |
|---|---|---|---|---|---|---|---|
| $N_{s,1}/N$ | 0,36603 | 0,26604 | 0,20711 | 0,16913 | 0,14279 | 0,12349 | 0,10876 |
| $N_{s,2}/N$ | 0,13397 | 0,17365 | 0,15892 | 0,13989 | 0,12326 | 0,10956 | 0,09835 |
| $N_{s,3}/N$ | - | 0,06031 | 0,09990 | 0,10453 | 0,09998 | 0,09319 | 0,08625 |
| $N_{s,4}/N$ | - | - | 0,03407 | 0,06460 | 0,07367 | 0,07473 | 0,07267 |
| $N_{s,5}/N$ | - | - | - | 0,02185 | 0,04512 | 0,05460 | 0,05785 |
| $N_{s,6}/N$ | - | - | - | - | 0,01519 | 0,03326 | 0,04205 |
| $N_{s,7}/N$ | - | - | - | - | - | 0,01117 | 0,02552 |
| $N_{s,8}/N$ | - | - | - | - | - | - | 0,00856 |
| $N_{s,9}/N$ | - | - | - | - | - | - | - |
| $N_{s,10}/N$ | - | - | - | - | - | - | - |
| $N_{s,11}/N$ | - | - | - | - | - | - | - |
| $N_{s,12}/N$ | - | - | - | - | - | - | - |
| $N_{s,13}/N$ | - | - | - | - | - | - | - |
| $N_{s,14}/N$ | - | - | - | - | - | - | - |
| $N_{s,15}/N$ | - | - | - | - | - | - | - |
| $N_{s,16}/N$ | - | - | - | - | - | - | - |
| $N_{s,17}/N$ | - | - | - | - | - | - | - |
| $N_{s,18}/N$ | - | - | - | - | - | - | - |
| $N_{s,19}/N$ | - | - | - | - | - | - | - |
| $N_{s,20}/N$ | - | - | - | - | - | - | - |
| ... | ... | ... | ... | ... | ... | ... | ... |

Tab. (first part)

| Q | 54 | 60 | 66 | 72 | 78 | 84 | 90 |
|---|---|---|---|---|---|---|---|
| $N_{s,1}/N$ | 0,09716 | 0,08779 | 0,08006 | 0,07358 | 0,06806 | 0,06332 | 0,05919 |
| $N_{s,2}/N$ | 0,08908 | 0,08135 | 0,07480 | 0,06921 | 0,06438 | 0,06017 | 0,05647 |
| $N_{s,3}/N$ | 0,07980 | 0,07401 | 0,06887 | 0,06432 | 0,06028 | 0,05668 | 0,05347 |
| $N_{s,4}/N$ | 0,06944 | 0,06587 | 0,06232 | 0,05894 | 0,05579 | 0,05288 | 0,05021 |
| $N_{s,5}/N$ | 0,05814 | 0,05701 | 0,05520 | 0,05311 | 0,05093 | 0,04878 | 0,04670 |
| $N_{s,6}/N$ | 0,04606 | 0,04752 | 0,04758 | 0,04687 | 0,04575 | 0,04441 | 0,04297 |
| $N_{s,7}/N$ | 0,03335 | 0,03751 | 0,03953 | 0,04028 | 0,04027 | 0,03979 | 0,03903 |
| $N_{s,8}/N$ | 0,02019 | 0,02709 | 0,03113 | 0,03338 | 0,03452 | 0,03494 | 0,03490 |
| $N_{s,9}/N$ | 0,00676 | 0,01637 | 0,02244 | 0,02623 | 0,02856 | 0,02990 | 0,03060 |
| $N_{s,10}/N$ | - | 0,00548 | 0,01354 | 0,01888 | 0,02241 | 0,02470 | 0,02615 |
| $N_{s,11}/N$ | - | - | 0,00453 | 0,01139 | 0,01611 | 0,01936 | 0,02157 |
| $N_{s,12}/N$ | - | - | - | 0,00381 | 0,00971 | 0,01390 | 0,01689 |
| $N_{s,13}/N$ | - | - | - | - | 0,00324 | 0,00837 | 0,01212 |
| $N_{s,14}/N$ | - | - | - | - | - | 0,00280 | 0,00730 |
| $N_{s,15}/N$ | - | - | - | - | - | - | 0,00244 |
| $N_{s,16}/N$ | - | - | - | - | - | - | - |
| $N_{s,17}/N$ | - | - | - | - | - | - | - |
| $N_{s,18}/N$ | - | - | - | - | - | - | - |
| $N_{s,19}/N$ | - | - | - | - | - | - | - |
| $N_{s,20}/N$ | - | - | - | - | - | - | - |
| ... | ... | ... | ... | ... | ... | ... | ... |

Tab. 2 (second part)

| Q | 96 | 102 | 108 | 114 | 120 | ... |
|---|---|---|---|---|---|---|
| $N_{s,1}/N$ | 0,05557 | 0,05236 | 0,04951 | 0,04695 | 0,04464 | ... |
| $N_{s,2}/N$ | 0,05319 | 0,05027 | 0,04765 | 0,04529 | 0,04315 | ... |
| $N_{s,3}/N$ | 0,05058 | 0,04798 | 0,04563 | 0,04349 | 0,04154 | ... |
| $N_{s,4}/N$ | 0,04776 | 0,04552 | 0,04345 | 0,04156 | 0,03981 | ... |
| $N_{s,5}/N$ | 0,04473 | 0,04287 | 0,04113 | 0,03950 | 0,03798 | ... |
| $N_{s,6}/N$ | 0,04151 | 0,04007 | 0,03867 | 0,03732 | 0,03604 | ... |
| $N_{s,7}/N$ | 0,03812 | 0,03712 | 0,03608 | 0,03503 | 0,03400 | ... |
| $N_{s,8}/N$ | 0,03456 | 0,03402 | 0,03336 | 0,03264 | 0,03187 | ... |
| $N_{s,9}/N$ | 0,03085 | 0,03080 | 0,03054 | 0,03014 | 0,02965 | ... |
| $N_{s,10}/N$ | 0,02701 | 0,02745 | 0,02761 | 0,02755 | 0,02735 | ... |
| $N_{s,11}/N$ | 0,02305 | 0,02401 | 0,02458 | 0,02488 | 0,02498 | ... |
| $N_{s,12}/N$ | 0,01900 | 0,02047 | 0,02148 | 0,02214 | 0,02254 | ... |
| $N_{s,13}/N$ | 0,01486 | 0,01685 | 0,01830 | 0,01932 | 0,02003 | ... |
| $N_{s,14}/N$ | 0,01066 | 0,01318 | 0,01506 | 0,01645 | 0,01748 | ... |
| $N_{s,15}/N$ | 0,00641 | 0,00945 | 0,01176 | 0,01353 | 0,01487 | ... |
| $N_{s,16}/N$ | 0,00214 | 0,00568 | 0,00843 | 0,01056 | 0,01222 | ... |
| $N_{s,17}/N$ | - | 0,00190 | 0,00507 | 0,00757 | 0,00954 | ... |
| $N_{s,18}/N$ | - | - | 0,00169 | 0,00455 | 0,00683 | ... |
| $N_{s,19}/N$ | - | - | - | 0,00152 | 0,00411 | ... |
| $N_{s,20}/N$ | - | - | - | - | 0,00137 | ... |
| ... | ... | ... | ... | ... | ... | ... |

Tab. 2 (third part)

The number $N_{s,i}$ of conductors in the i-th slot, determined by the equation (1), must be rounded to integer for the practical realization, this leads to differences $\Delta N_{s,i}$ from the ideal values given by the equation (1), where these differences can reach up to values given by the equation (10) in each individual slot without substantial degradation of winding parameters. Relative differences calculated according to this equation (10) are shown in Tab. 3 representing relative differences $\Delta N_{s,i}/N$ in individual slots for acceptable numbers Q of slots in the economical harmonic winding.

Tab. 3

| Q | 12 | 18 | 24 | 30 | 36 | 42 | ... |
|---|---|---|---|---|---|---|---|
| $\Delta N_{s,1}/N$ | ±0,2500 | ±0,1111 | ±0,0625 | ±0,0400 | ±0,0278 | ±0,0204 | ... |
| $\Delta N_{s,2}/N$ | ±0,2500 | ±0,1111 | ±0,0625 | ±0,0400 | ±0,0278 | ±0,0204 | ... |
| $\Delta N_{s,3}/N$ | - | ±0,1111 | ±0,0625 | ±0,0400 | ±0,0278 | ±0,0204 | ... |
| $\Delta N_{s,4}/N$ | - | - | ±0,0625 | ±0,0400 | ±0,0278 | ±0,0204 | ... |
| $\Delta N_{s,5}/N$ | - | - | - | ±0,0400 | ±0,0278 | ±0,0204 | ... |
| $\Delta N_{s,6}/N$ | - | - | - | - | ±0,0278 | ±0,0204 | ... |
| $\Delta N_{s,7}/N$ | - | - | - | - | - | ±0,0204 | ... |
| $\Delta N_{s,8}/N$ | - | - | - | - | - | - | ... |
| ... | ... | ... | ... | ... | ... | ... | ... |

Both described ways of conductor distribution in the stator/rotor winding according to the invention are suitable for the construction of three-phase induction machines and synchronous machines, especially synchronous generators.
The advantages of using the conductor distribution in the stator/rotor winding according to the invention are:

- generation of a purely harmonic course of the flux density along the air gap within each pole-pair,

- the winding is only two-layer compared to the state-of-the-art, where the so-called "harmonic winding" is three-layer,

- the economical harmonic winding has the winding factor $k_{w,1}$ = 0.90690, which is 2/√3 = 1.1547 times more in comparison to the winding factor of the so-called "harmonic winding" known from the state-of-the-art,

- the economical quasi-harmonic winding has the winding factor $k_{w,1}$ = 0.91189, and moreover it has the same total number of conductors in all slots (of both layers) unlike the economical harmonic winding.

## Claims

1. The stator/rotor of the three-phase AC revolving machine containing slots and at least one pole-pair, where the stator/rotor winding of all three phases is placed in slots of each pole-pair, **characterised in, that** the number of conductors in the i-th slot of one pole-pair in one phase of the three-phase winding is equal to the number of conductors given by the formula

$$N_{s,i} = \int_{(i-1)\frac{2\pi}{Q}}^{i\frac{2\pi}{Q}} n(\alpha)\mathrm{d}\alpha \,,$$

where Q is the number of slots of one stator/rotor pole-pair, i denotes the corresponding slot, where i is a natural number lying in the interval from 1 to Q, and n($\alpha$) is the oriented conductor density of the phase winding, while the maximum difference of the number of conductors $N_{s,i}$ is calculated according to the formula

$$\Delta N_{s,i} = \pm N \frac{36}{Q^2} \,,$$

where N is the total number of turns in one pole-pair of the phase winding, and Q is the number of slots of one stator/rotor pole-pair.

2. The stator/rotor of three-phase AC revolving machines according to the claim 1 **characterised in, that** the oriented conductor density n($\alpha$) in one pole-pair of the phase winding is given by the formula

$$
n(\alpha) = \begin{cases} N \cos\left(\alpha + \dfrac{\pi}{6}\right) & \text{pro } \alpha \in \left\langle 0 ; \dfrac{\pi}{3} \right\rangle \\[2em] 0 & \text{pro } \alpha \in \left\langle \dfrac{\pi}{3} ; \dfrac{2\pi}{3} \right\rangle \\[2em] -N \cos\left(\alpha + \dfrac{5\pi}{6}\right) & \text{pro } \alpha \in \left\langle \dfrac{2\pi}{3} ; \pi \right\rangle \\[2em] -N \cos\left(\alpha - \dfrac{5\pi}{6}\right) & \text{pro } \alpha \in \left\langle \pi ; \dfrac{4\pi}{3} \right\rangle \\[2em] 0 & \text{pro } \alpha \in \left\langle \dfrac{4\pi}{3} ; \dfrac{5\pi}{3} \right\rangle \\[2em] N \cos\left(\alpha - \dfrac{\pi}{6}\right) & \text{pro } \alpha \in \left\langle \dfrac{5\pi}{3} ; 2\pi \right\rangle \end{cases}
$$

where the electrical angle $\alpha$ measured along the air gap of the three-phase AC machine reaches values lying in the range from 0 to $2\pi$, where the angle $2\pi$ corresponds to one pole-pair of the stator/rotor phase winding, where the chosen positive current direction in the conductors of the corresponding slot corresponds to the positive value of the oriented density n($\alpha$) and the negative current direction corresponds to the negative value of n($\alpha$), and where N is the total number of turns of one pole-pair of the stator/rotor phase winding.

3. The stator/rotor winding according to the claim 1 **characterised in, that** the oriented conductor density n($\alpha$) in one pole-pair of the phase winding is given by the formula

$$
n(\alpha) = \begin{cases} N \left(\dfrac{3}{\pi}\right)^2 \left(\dfrac{\pi}{3} - \alpha\right) & \text{pro } \alpha \in \left\langle 0 ; \dfrac{\pi}{3} \right\rangle \\[2em] 0 & \text{pro } \alpha \in \left\langle \dfrac{\pi}{3} ; \dfrac{2\pi}{3} \right\rangle \\[2em] N \left(\dfrac{3}{\pi}\right)^2 \left(\dfrac{2\pi}{3} - \alpha\right) & \text{pro } \alpha \in \left\langle \dfrac{2\pi}{3} ; \pi \right\rangle \\[2em] N \left(\dfrac{3}{\pi}\right)^2 \left(\alpha - \dfrac{4\pi}{3}\right) & \text{pro } \alpha \in \left\langle \pi ; \dfrac{4\pi}{3} \right\rangle \\[2em] 0 & \text{pro } \alpha \in \left\langle \dfrac{4\pi}{3} ; \dfrac{5\pi}{3} \right\rangle \\[2em] N \left(\dfrac{3}{\pi}\right)^2 \left(\alpha - \dfrac{5\pi}{3}\right) & \text{pro } \alpha \in \left\langle \dfrac{5\pi}{3} ; 2\pi \right\rangle \end{cases}
$$

where the electrical angle $\alpha$ measured along the air gap of the three-phase AC machine reaches values lying in the range from 0 to $2\pi$, where the angle $2\pi$ corresponds to one pole-pair of the stator/rotor phase winding, where the chosen positive current direction in the conductors of the corresponding slot corresponds to the positive value of the oriented density n($\alpha$) and the negative current direction corresponds to the negative value of n($\alpha$), and where N is the total number of turns of one pole-pair of the stator/rotor phase winding.

Fig. 1

Fig. 2

Fig. 3